(19) Europäisches Patentamt

European Patent Office

Office européen des brevets

(11) **EP 1 622 399 A1**

(12) **EUROPEAN PATENT APPLICATION**
published in accordance with Art. 158(3) EPC

(43) Date of publication:
01.02.2006 Bulletin 2006/05

(21) Application number: 03723262.6

(22) Date of filing: 08.05.2003

(51) Int Cl.:
*H04Q 7/20* (1995.01)

(86) International application number:
**PCT/JP2003/005770**

(87) International publication number:
**WO 2004/100579 (18.11.2004 Gazette 2004/47)**

(84) Designated Contracting States:
DE FR GB

(71) Applicant: **FUJITSU LIMITED**
**Kawasaki-shi,**
**Kanagawa 211-8588 (JP)**

(72) Inventors:
• **KUWAHARA, Soichi;**
**c/o FUJITSU NISHI-NIHON**
**2-chome,Fukuoka-shi, Fukuoka 814-8588 (JP)**
• **TACHIBANA, Yasunori**
**c/o FUJITSU PERSONAL**
**Inagi-shi, Tokyo 206-0801 (JP)**

• **SAITO, Jun'ya**
**c/o FUJITSU LIMITED**
**Kawasaki-shi, Kanagawa 211-8588 (JP)**
• **KISHI, Makoto;**
**c/o FUJITSU NISHI-NIHON**
**2-chome, Fukuoka-shi**
**Fukuoka 814-8588 (JP)**

(74) Representative: **Sunderland, James Harry**
**Haseltine Lake & Co.,**
**Imperial House,**
**15-19 Kingsway**
**London WC2B 6UD (GB)**

(54) **LOCATION JUDGMENT METHOD USING CELL BROADCAST, MOBILE TERMINAL THEREOF, AND PROGRAM**

(57) A "cell broadcast information accumulation section" which accumulates cell broadcast information received by a "cell broadcast receiver" by relating it to the reception date and time, and especially information of a category for which the distribution area is "only one cell" (regional information). According to the cell broadcast information (especially regional information) accumulated in the "cell broadcast information accumulation section", the "location judgment section" judges the address of the area where the mobile terminal existed (that is, where the user was present) at the aforementioned reception date and time.

FIG. 1

## Description

## Technical Field

The present invention relates to a location determination method, a mobile terminal thereof and a program etc, which automatically collects the locations of an individual in the present and in the past using a cell broadcast service.

## Background Art

Users sometimes try to remember what they did on a given date and time, or when they did something, in daily conversation and other situations. On such an occasion, they can remember by a chain of memory with the help of a schedule book or other associated information.

For those who keep detailed notes, it is possible to remember ones own schedule quickly just by looking at their own schedule. However, not all people have such a habit and further no one would dedicate his/her time to frequently recording information that has a low possibility of being used.

Because of the spread of cell phones or mobile phones in recent years, many users carry mobile terminals such as a cell phones and PHS, and if the location of the mobile terminal in the past or currently (that is, the location of the user past/present) could be extracted, it would be very useful in the above described occasions, linking an electronic schedule and locations.

A technology for automatically collecting the event history of an individual has existed.

For example, corresponding times to locations by accumulating the unique ID of a base station, which the base stations broadcast, over time, and by obtaining data for mapping the base station ID and locations has been common practice (see Patent Document 1 and Patent Document 2).

Inventions in Patent Document 3 and Patent Document 4, for example, are proposed as inventions realizing the creation of an event history and event management etc., by detecting the user' s location using a cell phone with GPS functionality built-in. For example, in the invention in Patent Document 3, based on latitude/longitude information measured by a GPS function equipped in a mobile terminal and data stored in a secondary storage device, it is converted into information recognizable to users (such as an address) and displayed.

However, as in Patent Document 1 and Patent Document 2, inventions, which require correspondence data of each base station ID and a location, are not feasible without provision of mapping information of base station IDs and map information from a communication network provider because the correspondence of a base station ID and the location of the base station is managed by network and it is impossible for the terminal of an end user to pinpoint the location from an base station ID only. And information provision services for mapping a base station ID and map information is not likely to be fee-based service.

The inventions in Patent Document 3 and Patent Document 4 are different from the inventions in Patent Document 1 and Patent Document 2. They do not require provision of any specific information (such as mapping information of a base station ID to a map) , however they require regular measurement by the built-in GPS function of a cell phone. And mobile terminals with GPS functionality are high in cost. If the interval of regular measurement is too long, location information would be discrete, and if the interval is too short, battery consumption would become aggravated.

It is an object of the present invention to provide a location judgment method, which is able to judge the location of a user carrying a mobile terminal at any time without the need of either a special configuration such as a GPS function or mapping information of base stations provided by the network, and therefore able to automatically collect event history of the individual, a mobile terminal thereof and a program thereof.

Patent Document 1:

Japanese unexamined patent publication bulletin No. 06-311093

Patent Document 2:

Japanese unexamined patent publication bulletin No. 2000-121763

Patent Document 3:

Japanese unexamined patent publication bulletin No. 2000-180199

Patent Document 4:

Japanese unexamined patent publication bulletin No. 11-338806

## Disclosure of the Invention

A mobile terminal according to the present invention, has a configuration comprising cell broadcast information reception means for receiving cell broadcast information sent from a base station of the mobile terminal, cell broadcast accumulation means for accumulating the received cell broadcast information after associating it with the reception date and time, and location judgment means for judging the location where a user was present at the reception time of the reception date based on the information stored in the cell broadcast information accumulation means.

With the mobile terminal, a location where a user possessing the mobile terminal is/was present at an arbitrary time (reception date and time) in the present or in the past can be judged. Therefore, the location of the user possessing the mobile terminal at an arbitrary time can be determined without the need of a special configuration such as GPS functions and mapping information of a base station provided from a network, and therefore, an event history of the individual can be automatically collected.

Also cell broadcast information is, for example, regional information, which is information associated with an area of each of the base stations.

In general, cell broadcast information is transmitted to multiple addresses in multiple channels. Although each channel (category) has different information delivered, information in one category has a distribution area of the "entire network" and information in another category has a distribution area of "only one cell". Category information (regional information) with its distribution area of "only one cell" allows delivery of different information to each base station. For each base station, information of a variety of stores existing in the area of the base station can be delivered, for example.

By using the regional information, an approximate address etc. of the location of the base station can be specified. For example, it is likely that information about a variety of stores existing in the area of the base station presents information of the store address (including its postal code), the phone number, and the name of the nearest train station as well as promotion information of the store.

Then, the location judgment means, for example, specifies approximate address etc. of the location of the base station based on postal code information, fixed-line phone number information, and station name information comprised in the regional information.

If multiple addresses are extracted, at that time the result is determined by majority.

The mobile terminal can have a configuration further comprising base station identifier extraction means for extracting a base station identifier sent from the base station with the cell broadcast information, base station identifier-location information correspondence means for storing the base station identifier after associating it with a location judged by the location judgment means, and second location judgment means for, when the cell broadcast information was sent from a base station with a base station identifier stored in the base station identifier-location information correspondence means, judging the location where the user was present based on the base station identifier-location information correspondence means without using the cell broadcast information.

The inventions in Patent Document 1 and Patent Document 2 are, even if a base station ID is obtained, not feasible without provision of correspondence associating information of the base station ID and its location (address etc.) from the network provider.

For the base stations in which the location, that is the location (address etc.) of the base station already judged by the location judgment means, by storing the location judged (address etc.) in association with base station ID of the base station, that is by creating pseudo-correspondence associating information, the location can be specified by referring to the pseudo-correspondence associating information later on. Then, there is no need to execute the process of the location judgment means, and the location can be specified quickly. Also, there is no need to accumulate cell broadcast information.

The above mobile terminal can have a configuration further comprising, for example, information-to-be-anlyzed specification means for specifying information to be analyzed by the location judgment means as information of a specific channel among a plurality of channels delivering the cell broadcast information.

The specific channel is a channel delivering the regional information, for example.

Also, the mobile terminal can have a configuration further comprising information-to-be-received specification means for specifying, for example, the cell broadcast information received by the cell broadcast information reception means as cell broadcast information of a specific channel among a plurality of channels, which the base station delivers.

By so doing, it is not necessary to receive and to store all cell broadcast information but to receive and to store only information of a specific channel, and thus, loading and memory capacity relating to reception processes can be reduced.

The problems stated above can be solved by causing a computer to execute a program after reading out from a computer readable recording media, which stores programs causing a computer to control similar functions to the functions of each configuration of the present invention. That is, the present invention can be configured by the program itself, realizing functions of the above-mentioned mobile terminal etc. or by the recording media itself stores the program.

**Brief Description of the Drawings**

The present invention will be more apparent from the following detailed description in conjunction with the accompanying drawings, in which:

Fig. 1 is a diagram, describing the configuration of the entire system in relation to a location judgment method using cell broadcast of the present embodiment;

Fig. 2 is a functional block diagram of a mobile terminal relating to a location judgment method, using cell broadcast;

Fig. 3 is an example of the data structure of cell broadcast information transmitted from the base station to each mobile terminal;

Fig. 4 shows an example of channel list;

Fig. 5 is an example of a table of locations to be analyzed;

Fig. 6 is a process flowchart of receiving cell broadcast information;

Fig. 7 shows a received cell broadcast table for location management;

Fig. 8 shows an example of a location-base station ID correspondence table;

Fig. 9 describes an example of CB information;

Fig. 10 is a flowchart of location judgment processes, using postal codes;

Fig. 11 is an example of a database (of postal codes) for location analysis;

Fig. 12 is a flowchart of the location judgment processes, using phone numbers;

Fig. 13 is an example of a database (of phone numbers) for location analysis;

Fig. 14 is a flowchart of the location judgment processes, using the nearest train station name;

Fig. 15 is an example of a database (of train station names) for location analysis;

Fig. 16 is an example of an electronic diary linked with a location judgment result;

Fig. 17 describes an example of a hardware configuration of the mobile terminal;

Fig. 18 describes an example of a hardware configuration of a computer; and

Fig. 19 shows an example of downloading a program or reading recording media storing a program.

**Best Mode for Carrying Out the Invention**

In the following description, an embodiment of the present invention is provided with reference to drawings.

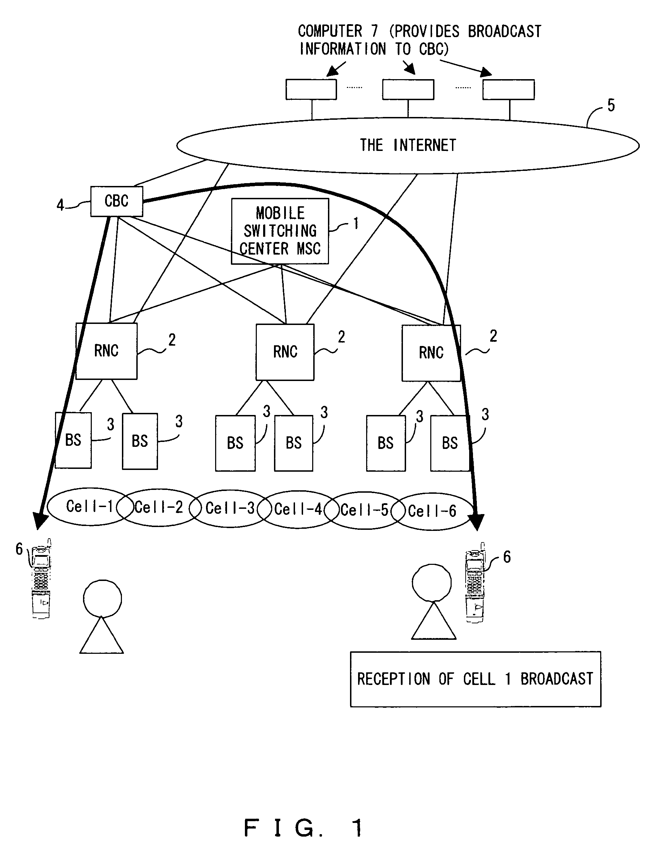

Fig. 1 shows a configuration of an entire system relating to the location judgment method using cell broadcast of the present invention. This configuration itself has a general network configuration of cell broadcast.

In the system configuration shown in Fig. 1, Mobile Switching Center (MSC) 1, Radio Network Controller (RNC) 2, and Base Station (BS) 3 are a common configuration of an existing cell phone networks. To explain it briefly, the Mobile Switching Center (MSC) 1 is a switching center controlling mobile communication networks such as cell phone networks, and also controlling the following Radio Network Controller (RNC) 2 and Base Station (BS) 3 (hereinafter referred to as base station 3).

A mobile terminal 6 such as a cell phone and a PHS performs wireless communication with a base station 3 in an area (cell) where the mobile terminal 6 is currently present, makes a call to another mobile terminal 6 via the base station 3, radio network controller (RNC) 2 and mobile switching center (MSC) 1, sends/receives e-mails, and accesses to simplified homepages etc. (homepages for cell phones) on the Internet 5 via a radio network controller (RNC) 2, a base station 3, and the Internet 5. As is widely known, each base station 3 covers a designated area (Cell-1 ~ Cell-6), and performs wireless communication with a mobile terminal such as cell phone, which is currently present in the area.

The CBC (Cell Broadcast Center) 4 is a server providing cell broadcast service (CBS), and the cell broadcast information is simultaneously transmitted to multiple addresses from the base station 3 via radio network controller (RNC) 2 in every prescribed cycle, following an instruction from the broadcast center CBC4. The cell broadcast information is, for example, information prepared by a cell broadcast service provider, or is information requesting information provision requested from any of the other information processor devices (a computer 7 in Fig. 1, for example) via the Internet 5 etc.

The mobile terminal 6 of the present embodiment has a function for receiving the cell broadcast information. Currently, cell broadcast service has started in Europe and other areas, and cell phones etc. with a function for receiving cell broadcast information exist. Therefore expansion of the service is expected in Japan. (In Hong Kong, for example, information service over 40 channels has been offered).

In the location judgment method of the present embodiment, the locations of a user in the past and in the present are determined utilizing the cell broadcast information (especially, regional information explained later) transmitted from each base station 3. Here, "in the past" means that regional information, which the mobile terminal 6 received from each base station 3 whilst a user is in action, is stored, and based on this information, the location at that time is determined. "In the present" means the process to determine the location is executed as soon as the regional information is received.

In the following description, to be more specific, information sent by the cell broadcast has various kinds including information relating to the local area.

Generally, cell broadcast service (CBS) realizes collective delivery of information to a specific area of the network. The distribution area can be specified from three kinds, PLMN wide, Service Area wide, and Cell wide, where Cell wide is information in the smallest unit. CBS, also, realizes simultaneous delivery of information with a plurality of types by specifying a channel (category), and the mobile terminal 6 has a setting such that it only receives information in a designated channel. For example, information of various stores present in the area of the cell (base station) can be delivered to each cell.

For example, in the case of restaurant information etc., which are present in the area of the cell (base station), usually, information such as an address, a phone number, guidance information for the nearest train station is included as well as information such as an advertisement of each restaurant. Therefore, using the information, the approximate location that the user was present at, a given time can be specified.

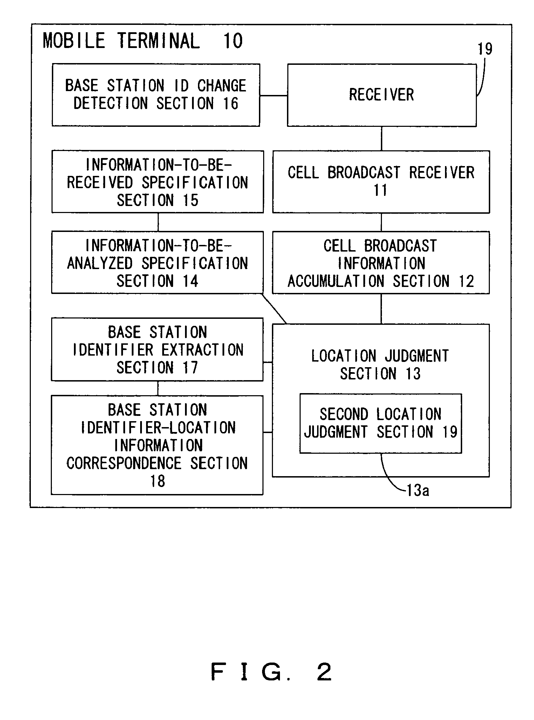

Fig. 2 is a functional block diagram of a mobile terminal such as cell phone relating to the location judgment method using cell broadcast of the present embodiment.

A mobile terminal 10 (6) in Fig. 2 comprises a cell broadcast receiver 11, a cell broadcast information accumulation section 12, a location judgment section 13, a second location judgment section 13a, an information-to-be-received specification section 15, a base station ID change detection section 16, a base station identifier extraction section 17, and base station identifier-location information correspondence section 18, and receiver 19. The receiver 19 has a configuration of a common wireless communication function for receiving radio waves from the base station 3.

Among the radio waves received by the receiver 19, the "cell broadcast receiver 11", receives various types of cell broadcast information collectively transmitted to all mobile terminals 6 present in the distribution area of the base station from the base station. In so doing, and by receiving only channel information specified by the "information-to-be-received specification section 15", it is possible to reduce the loading of cell broadcast information reception. It is desirable that the channel specified by the "information-to-be-received specification section 15" is a channel delivering regional information. The regional information is category information whose distribution area is "only one cell", that is the restaurant information mentioned above, for example.

The "cell broadcast information accumulation section 12" accumulates the cell broadcast information received in the "cell broadcast receiver section 11", associating it with the reception date and time. In such a case also, by causing the "cell broadcast receiver section 11" to receive only the channel information designated by the "information-to-be-received specification section 15", data capacity can be reduced because only the designated information need be accumulated.

The "location judgment section 13" judges the address etc. of the area where the mobile terminal existed (i.e. the user was present) at the above reception date and time, based on the cell broadcast information accumulated in the "cell broadcast information accumulation section 12" and a database for location judgment explained later. In so doing, information to be processed in the cell broadcast information can be made as channel information specified by an "information-to-be-analyzed specification section 14" described later, that is regional information, particularly. In this example, the specification by the "information-to-be-received specification section 15" is not supposed to be performed (the specification by the "information-to-be-received specification 15" can be performed. The information to be analyzed can be one of those).

Or, when only the channel information (regional information, particularly), specified by the "information-to-be-received specification section 15", is accumulated in the "cell broadcast information accumulation section 12", the "location judgment section 13" should use the regional information without modification for the judgment process.

A detailed explanation of the location judgment method by the "location judgment section 13" is provided later.

the "base station identifier extraction section 17" extracts information, able to clearly identify the base station, which has transmitted the cell broadcast information (hereinafter referred to as a base station identifier), from the received data. For example, when a base station ID, assigned to clearly identify each base station in the cell phone network, is contained within the received data, the base station ID is extracted.

The "base station identifier-location information correspondence section 18" relates location information, judged by the "location judgment section 13", to the base station identifier extracted by the "base station identifier extraction section 17", and stores them.

The "second location judgment determination section 19" specifies a location by the "base station identifier-location information correspondence section 18" when cell broadcast information is transmitted from a base station with a base station identifier stored in the "base station identifier-location information correspondence section 18". That is, the location is judged by the "location judgment section 13" and is stored in the "base station identifier-location information correspondence section 18" for base stations the distribution area of which a user passed through in the past and received cell broadcast information. Thus, it is not necessary to carry out the process by the "location judgment section 13" when the user passed through the distribution area of the same base station once again and received the cell broadcast information.

The "information-to-be-analyzed specification section 14" and the "information-to-be-received specification section 15" have in common a point that they have users etc. assign a specific channel from cell broadcast information and store the channel, and the location judgment process is carried out based on the specific channel information.

A difference is, as stated above, the point that the "information-to-be-analyzed specification section 14" allows the selection of specified channel information in the location judgment process of the "location judgment section 13", whereas the "information-to-be-received 15" only allows to receive a specified channel information in reception by the "cell broadcast receiver 11". The specific channel can not only be specified by users but also can be set in advance of shipment of the mobile terminals 6 from the factory, for example.

It is desirable that the specified channel is a channel delivering regional information of each base station (particularly, the information containing information relating to the location). That is, the channels transmitting cell broadcast information, as explained above, can be roughly divided into two types: a channel with a distribution area of the "entire network" and a channel with a distribution area of "only one cell". The former is that entire information is, basically, not limited to a specific area such as weather forecasts. On the other hand, the latter is that the channel information of used as advertisement in the area such as the restaurant information and regional information is basically abundant in information, which allows specifying a location (address) in the area. Therefore, judgment accuracy and speed of the location can be improved by specifying a channel to deliver such regional information, and by judging the location based on the channel information.

The "base station ID change detection section 16" extracts the base station identifier (base station ID) , and determines whether or not the base station ID has changed. That is, it determines whether or not the user has moved from the area of a base station to the area of another base station.

By analyzing the received cell broadcast information with the above configuration, it is possible to specify the location of the mobile terminal 6 (=user) at that time (the time when the cell broadcast is received).

If the location judged by the "location judgment section 13" is associated with the base station identifier of the base station, which transmitted the cell broadcast information, and is stored, later in passing through the area of the same base station, the location can be specified by the "second location determination section 19" without carrying out the process of the "location judgment section 13". Therefore, it is possible to reduce load (battery consumption and CPU load) of the mobile terminals relating to the location analysis process.

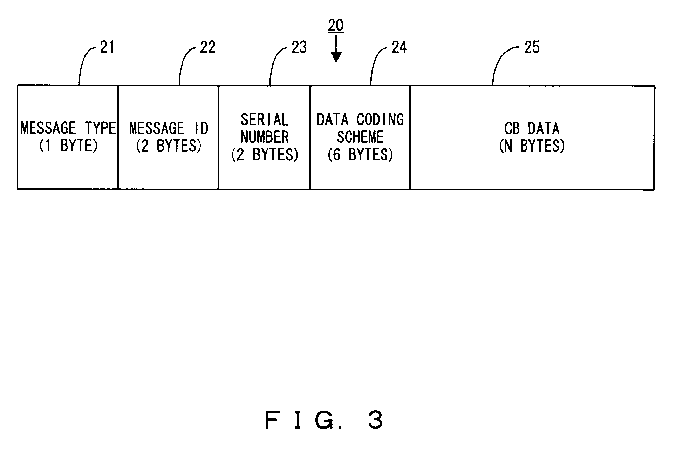

In the following description, details of the location judgment method using the cell broadcast are further explained with reference to specific examples and flowcharts in Fig. 3 and after.

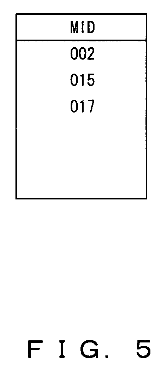

A user, registers an MID (Message ID) in advance, of information to be analyzed to a table of locations to be analyzed 30 shown in Fig. 5 by the "information-to-be-analyzed specification section 14" or the "information-to-be-received specification section 15". That is, the channel is selected and registered. The MID is an identifier, which identifies the types of cell broadcast information, and is assigned different IDs for each service (such as weather forecast and restaurant information). As described above, when receiving a regular cell broadcast service, the user can select and specify the channel (MID) , which provides information that the user wants to see. However, in the present embodiment, the user selects and registers an MID suitable for specifying the location from the MIDs. Alternatively, the selection and registration of the MID can be set in the mobile terminals as a default in advance of shipment.

Here in Fig. 3, is an example of the data structure of the cell broadcast information sent from the base station 3 to each mobile terminal 6.

The cell broadcast information 20 consists of a message type 21, a message ID (MID) 22, a serial number 23, a data coding scheme 24 and CB data 25.

The mobile terminal 6, which received the cell broadcast information 20, can identify channels by the message ID (the MID 22) . The serial number 23 is updated every time a message ID (MID) 22, that is information from the same channel, is updated. Therefore, whether or not the information delivered in a channel has been updated for each channel can be determined.

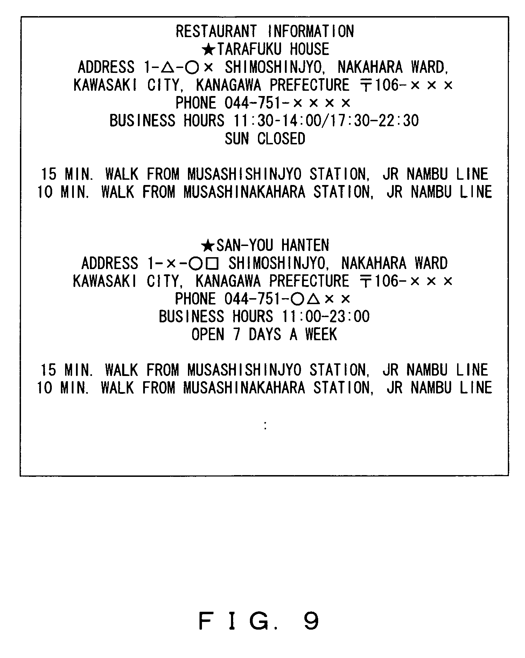

The message type 21 is an identifier indicating whether the cell broadcast information 20 is a CB message or a schedule message. The data coding scheme 24 is a character code type and language type etc., and is not particularly related to the present invention. Also, the CB data 25 is CB information, that is the content of the cell broadcast information, and an example is shown in Fig. 9.

Although it is not described in figures, each base station transmits the base station identifier (base station ID) as a part of the cell broadcast information 20, or as information other than the cell broad information.

In Fig. 3, only information of one channel of cell broadcast information transmitted from the base station 3 is shown, however a plurality of channels are actually present, and the information of each channel has the structure shown in Fig. 3.

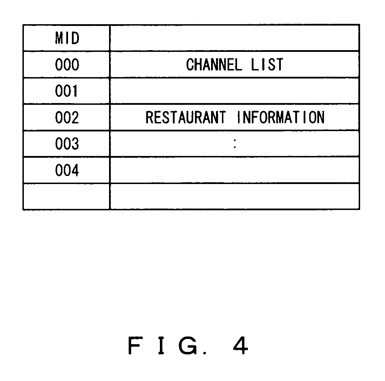

Here, as described above, although various types of information are provided by each channel, general cell broadcast service provides, as in Fig. 4, for example, information indicating what kind of information each channel transmits (channel list) in a certain channel (the channel MID=000 in this example). the "information-to-be-analyzed specification section 14" or the "information-to-be-received specification section 15", for example, automatically selects this specific channel, display information of the channel list, and lets the user select any channel from the list.

In the example of the table of location-to-be-analyzed 30 in Fig. 5, channels of MID=002, 015, 017 are selected and registered as channels to be used for location judgment processes.

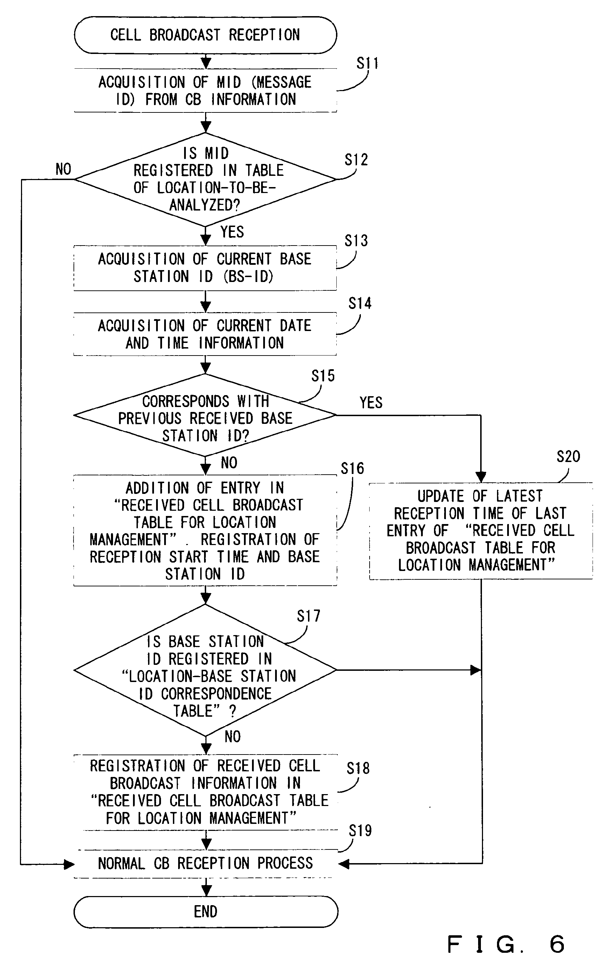

While a user possessing the mobile terminal 6 is undertaking an arbitrary action (for example, shopping in town or visiting customers on business), the mobile terminal 6 performs a process shown in Fig. 6 every time it receives cell broadcast information transmitted from the base station 3.

Fig. 6 is a process flowchart of receiving cell broadcast information.

In Fig. 6, first, the "cell broadcast receiver 11" acquires the message ID (MID) 22 of the received cell broadcast information (Step S11), and determines whether or not it is registered in the table of location-to-be-analyzed 30 (Step S12). If it is not registered in the table of location-to-be-analyzed 30 (Step S12, NO), then the normal cell broadcast information reception process is performed (Step S19).

Conversely, if it is registered (Step S12, YES), the base station ID of the base station 3, which transmitted the cell broadcast information is acquired (Step S13) and at the same time, current date and time information are obtained by a built-in clock etc. (Step S14).

And compared with the base station ID of the base station 3, which was the source of transmission, in previously received cell broadcast information, and whether the two are the same or not is determined (Step S15).

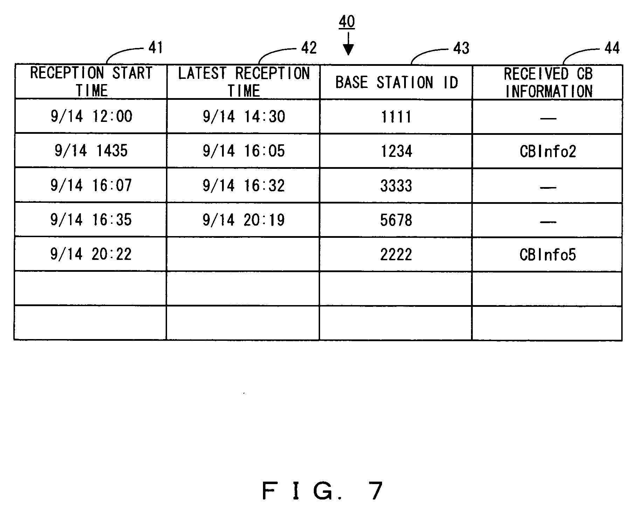

If the base station ID is not the same as the previous one, (Step S15, NO), a new entry (record) is added to a "received cell broadcast table for location management" 40, exemplified by Fig. 7, the base station ID acquired in Step S13 is recorded in a base station ID 43, and the current data and time information acquired in Step S14 are recorded as a reception start time 41 (Step S16). If the two are the same (Step S15, YES), the latest reception time 42 of the last entry in the "received cell broadcast table for location management" 40 is used to update the current date and time information (Step S20).

Here, a "received cell broadcast table for location management" 40 is explained with reference to Fig. 7. The "received cell broadcast table for location management" 40 is a table recording the event history of a user, and comprises a reception start time 41, a latest reception time 42, a base station ID 43 and reception CB information 44.

The process in Step S15 determines whether or not the base station ID acquired in Step S13 is the same as the base station ID of the last entry in the table 40. In the example in Fig. 7, the base station ID 43 of the last entry is "2222", therefore agreement/disagreement of the ID is to be determined by comparison with this number. If the user remains within the distribution area of a base station 3, the process in Step S20 is repeated and the latest reception time 42 is repeatedly updated, and therefore the time period that the user stayed within the distribution area of the base station 3 with the base station ID 43 can be determined later by referring to the reception start time 41 and the latest reception time 42.

Following the process in Step S16, whether or not the base station ID acquired in Step S13 is registered in a "location-base station ID correspondence table" 50 is judged (Step S17). If it is not registered (Step S17, NO), the CB data 25 (CB information) of the received cell broadcast information is stored as reception CB information 44 of the new entry in the "received cell broadcast table for location management" 40 (Step S18), and then the process proceeds to the normal CB reception process (Step S19). Conversely, if it is registered (Step S17, YES), the received CB information is discarded and the process proceeds to Step S19.

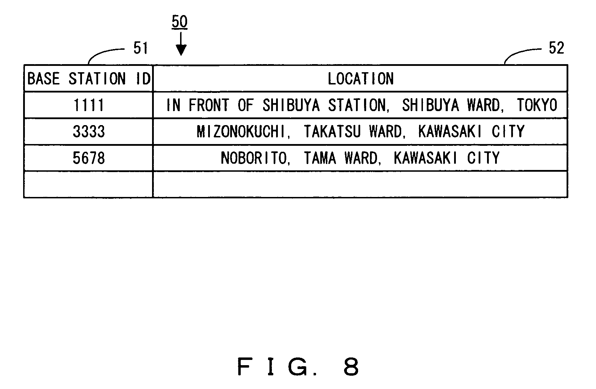

Here, an example of the "location-base station ID correspondence table" 50 is shown in Fig. 8.

The "location-base station ID correspondence table" 50, manages the correspondence of the base station ID to the location, and comprises a base station ID 51 and a location 52. A new record is registered every time a location (such as an address and a train station name) corresponding to each base station ID is judged by the location judgment section 13. That is, the "location-base station ID correspondence table" 50 does not store any data in the initial state, and by the process of the location judgment section 13, stored data is sequentially added.

By such a system, when a user visits the area of the base station, which the user had passed in the past and the corresponding location has already been determined, the location of the base station does not have to be determined again. Consequently, the received CB information does not have to be stored either. The CB information is not stored in the received CB information 44 of the records in which the base station ID 43 of the "received cell broadcast table for location management" 40 is '1111', '3333', or '5678'. This is because, as shown in Fig. 8, the locations corresponding to these base stations are determined and registered.

Meanwhile, for the base stations with the base station ID 43 in Fig. 7 of '1234' and '2222', the corresponding locations (such as address and train station name) are not yet determined, therefore based on the CB information (CB Info 2, CB Info 5), the location judgment process is performed by the location judgment section 13.

The normal CB receiving process of Step S19 is that the storage area to store the CB information of each channel is assigned, and if the information of a serial number 23 of the received packet is updated, the new CB information is overwritten in the storage area for the channel. If the CB information is immediate (immediate display), it is displayed on a standby display etc. of the mobile terminal in real time.

In the following description, details of the location judgment process by the location judgment section 13 are explained.

Fig. 9 shows an example of the above CB information.

The example of Fig. 9 is restaurant information.

The restaurant information provided as the CB information is information which a restaurant has requested to be delivered to a cell broadcast center 4, for advertisement, as in the advertising information of a homepage, for example. The information tends to contain the address (including the postal code), the phone number, the business hours, and the nearest train station and so forth to encourage customers, interested in the advertisement, coming to the restaurant in addition to advertising information such as the menu, prices, specialties of the restaurant (omitted in Fig. 9). The restaurant information is information whose distribution area is "only one cell", that is it is an example of regional information, as explained above, and basically information of restaurants present in the distribution area of the base station is delivered for each base station.

Therefore, the location judgment section 13 is able to determine the approximate address etc. around the base station which delivered the restaurant information, by utilizing the information of the postal code, the address, the phone number, and the nearest train station etc., and therefore is able to specify an approximate location that the user was present at, at a given time.

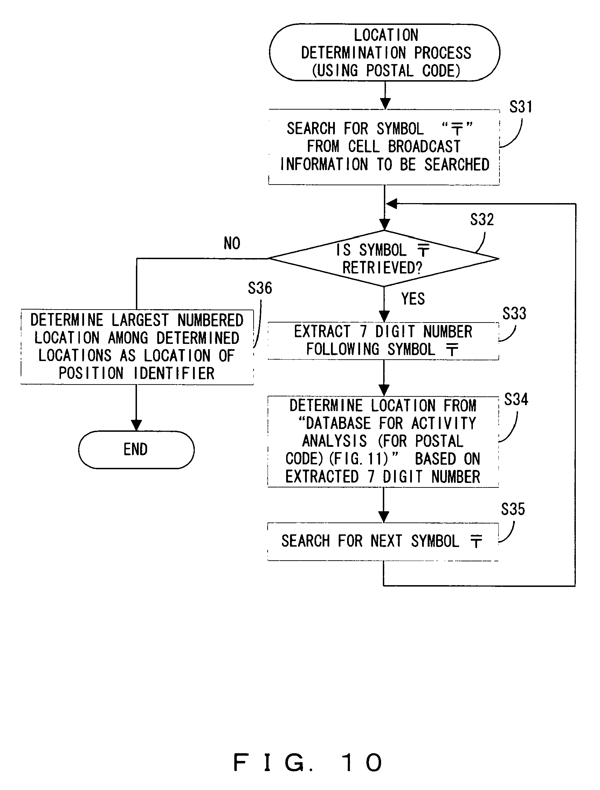

Fig. 10 is a flowchart of the location judgment process utilizing a postal code.

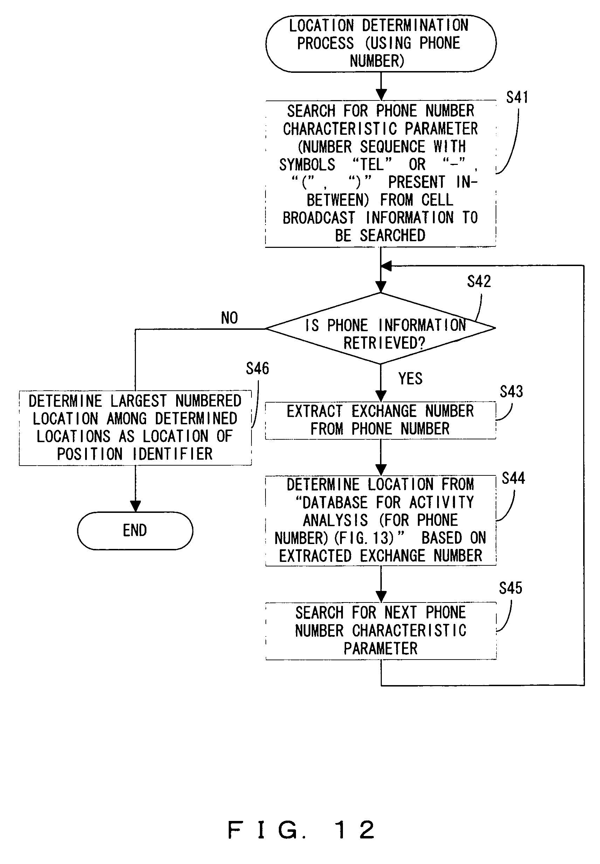

Fig. 12 is a flowchart of the location judgment process utilizing a phone number.

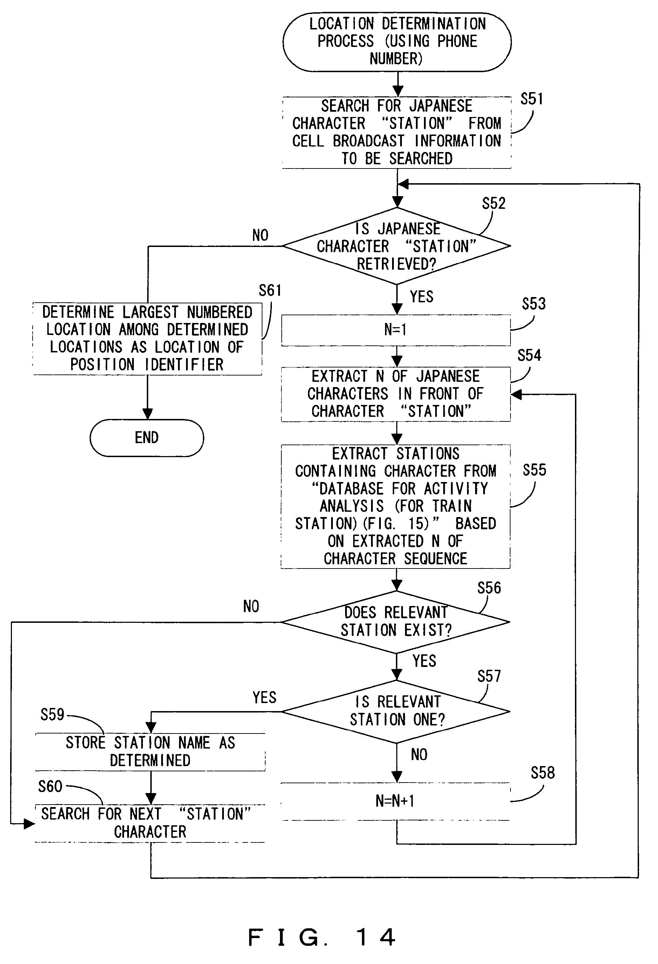

Fig. 14 is a flowchart of the location judgment process utilizing the nearest station name.

First, an explanation of the process in Fig. 10 is provided.

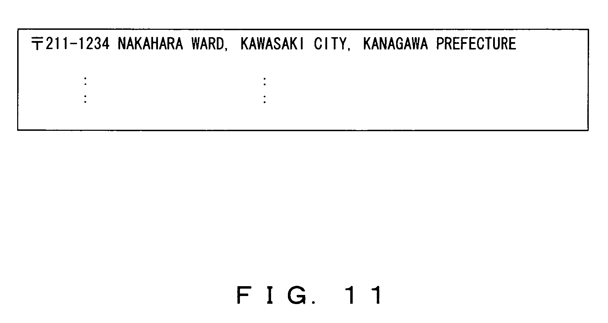

In the case of process in Fig. 10, it is required that a database (of postal codes) for location analysis, shown in Fig. 11, is stored in the memory of the mobile terminal 6 in advance. As shown in Fig. 11, each postal code and addresses corresponding to the postal code are stored in the database.

In Fig. 10, the location judgment section 13, first, searches for "〒" within the CB information shown in Fig. 9 (Step S31). And every time the character "〒" is retrieved (Step S32, YES), the processes Step S33~Step S35 are repeatedly performed. And a 7 digit sequence following the retrieved "〒" (to be exact, 3 digit number+ (-) +4 digit number) is extracted (Step S33), based on the extracted sequence, a database (of postal codes) for location analysis in Fig. 11 is searched for, an address corresponding to the postal code is acquired, and the address is temporarily stored (Step S34). In the example of Fig. 11, when the digit sequence extracted in Step S33 is '211-1234', "Nakahara ward, Kawasaki city, Kanagawa prefecture" is obtained in Step S34.

The next "〒" is searched for (Step S35), and the processes of Step S33~S35 are repeatedly performed until all "〒" have been retrieved. Every time an address is obtained, it is stored temporarily.

Finally, based on all the addresses stored temporarily, the location corresponding to the base station is determined by majority, and the result is registered in the "location-base station ID correspondence table" 50 (Step S36). For example, six of the character "〒" were found, and as a result of repeated process of Step S34, "OX town, Nakahara ward, Kawasaki city, Kanagawa prefecture" was obtained from two, and "ΔX town, Nakahara ward, Kawasaki city, Kanagawa prefecture" was obtained from four. Then, by majority, it is determined as "ΔX town, Nakahara ward, Kawasaki city, Kanagawa prefecture".

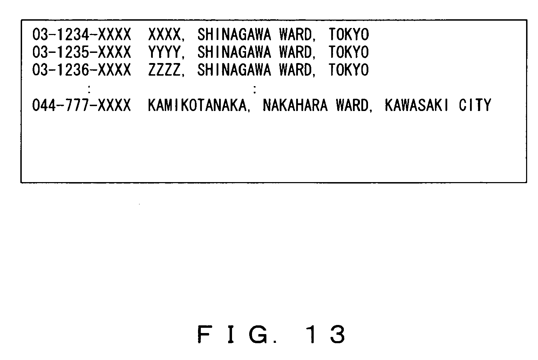

Next, the process utilizing phone numbers is explained with reference to Fig. 12 and Fig. 13.

In the case of the processes in Fig. 12, it is required that a database (of phone numbers) for location analysis, shown in Fig. 13, is stored in the memory of the mobile terminal 6 in advance. As shown in Fig. 13, the phone numbers (fixed line phone number) of various stores and facilities and addresses corresponding to the phone number are stored in the database. In Fig. 12, digit sequences including a phone number characteristic parameter are searched first from the CB information as in Fig. 9 (Step S41). The digit sequences including phone number characteristic parameters is, for example, a 10 digit sequence following characters such as "TEL" or "Phone", and a 10 digit sequence with symbols, such as "-", "(" and ")", present between numbers.

Every time a digit sequence including a phone number characteristic parameter is found (Step S42, YES), the processes of Step S34~S45 are repeatedly performed. That is, the exchange number, which is the sequence of the first 6 digits, is extracted from the searched and extracted 10 digit sequence (Step S43), and based on the extracted number sequence, a database (of phone numbers) for location analysis, shown in Fig. 13, is searched. And the address corresponding to the phone number is obtained, and stored temporarily (Step S44). As described above, phone numbers of fixed lines are stored in the database, and when a number of a cell phone or PHS etc. (a number starting with 090 or 070) appears in the CB information, the search result will be "no match".

And, the next phone number characteristic parameter is searched (Step S45), and the processes of Steps S33~S35 are repeatedly performed until all characters including phone number characteristic parameters have been retrieved.

Finally, as in the case of the process utilizing postal codes described above, the location corresponding to the base station is determined by majority, and the result is registered in the "location-base station ID correspondence table" 50 (Step S46).

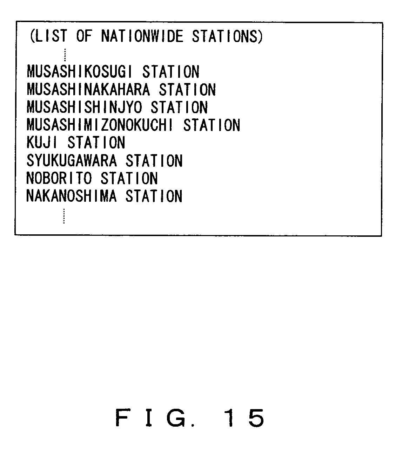

Next, the process utilizing train station names is explained with reference to Fig. 14 and Fig. 15.

In performing the process in Fig. 14, it is required that a database (of train station names) for location analysis, shown in Fig. 15, is stored in the memory of the mobile terminal 6 in advance. As shown in Fig. 15, a list of nationwide train station names is stored in the database, for example. It is an example, and if the activity range of the user is limited within the metropolitan area, the stored list could be the names of train stations in the metropolitan area.

In Fig. 14, first, the CB information, shown in Fig. 9, is searched for a Japanese character "station" (Step S51). And every time the Japanese character "station" is found (Step S52, YES), the processes of Steps S53~S58 are repeatedly performed. That is, an initial value "1" is assigned to a variable N (Step S53), and the N of Japanese characters before the retrieved "station" are extracted (Step S54). For example, there is a sentence in the CB information "10 minutes walk from Musashinakahara station", and because N has an initial value=1 at first, a Japanese character "hara" is extracted. When the process of Step S54 is performed again after the processes of Steps S55~S58, Japanese characters "naka-hara" are extracted, and in the same way, Japanese characters "sashi-naka-hara" and "Mu-sashi-naka-hara" are extracted afterward.

Based on the Japanese characters extracted in Step S54, a database (of station names) for location analysis, shown in Fig. 15, is searched, and station names including the relevant Japanese characters are extracted (Step S55). If such a station name does not exist at the stage of N=1 (Step S56, NO), that is, the relevant station name does not exist in the database, and therefore the process moves on to the step searching for the next Japanese character "station" in the CB information (Step S60).

If the relevant station name exists (Step S56, YES), it is further determined whether there is only one of the relevant station name or not (Step S57). In the example above, at the stage of N=1, there are two station names including the Japanese character "hara" in the example of the database in Fig. 15: "mu-sashi-naka-hara" and "shuku-ga-wara (hara)". Therefore, the judgment of Step S57 is NO, N is incremented by 1 (Step S58), and the process returns to Step S54.

In the above example, among station names in the database of Fig. 15, only "mu-sashi-naka-hara" corresponds to the Japanese character sequence "naka-hara" extracted in Step S54 at the stage of N=2. Therefore, the judgment of Step S57 is YES, and the station name (mu-sashi-naka-hara) is stored temporarily as a prospective location corresponding to the base station (Step S59). And the process proceeds to the process searching for the next Japanese character "station" in the CB information (Step S60).

The process of Steps S52~S60 are performed for all station names in the CB information, and finally, as in the case of the process utilizing the postal codes, the location corresponding to the base station is determined by majority, and the result is registered in the "location-base station ID correspondence table" 50 (Step S61).

A program for the location analysis process and a database for analysis can be stored in memory in the mobile terminal 6, or can be stored in an arbitrary server. That is, reception and storage of the CB information is performed by mobile terminals, however the mobile terminal does not necessarily have to perform the location analysis process based on the stored CB information. In such a case, the mobile terminal transmits the accumulated CB information to the arbitrary server via a network, requests the location analysis process, and receives the result of process.

Based on the "received cell broadcast table for location management" 40 and the "location-base station ID correspondence table" 50 created by the above explained processes, it is possible to display where a user was present and at what time (or from what time to what time) the user was present in the past.

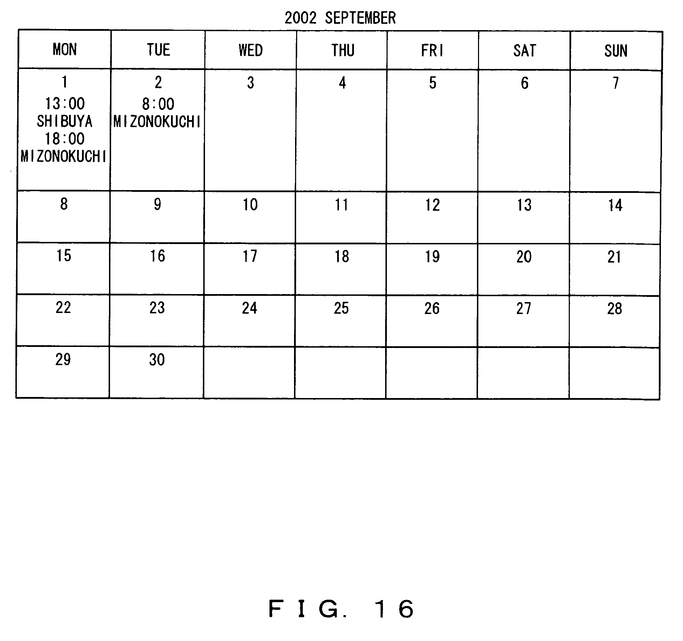

Fig. 16 describes an electronic diary, which is an example of the above display.

As shown in Fig. 16, by associating the above process results with an electronic diary, the event history of a user can be made comprehensible in one glance. Of course, it is not limited to an electronic diary that the process result is to be associated with, but other associations are possible such as map plotting the event history, for example.

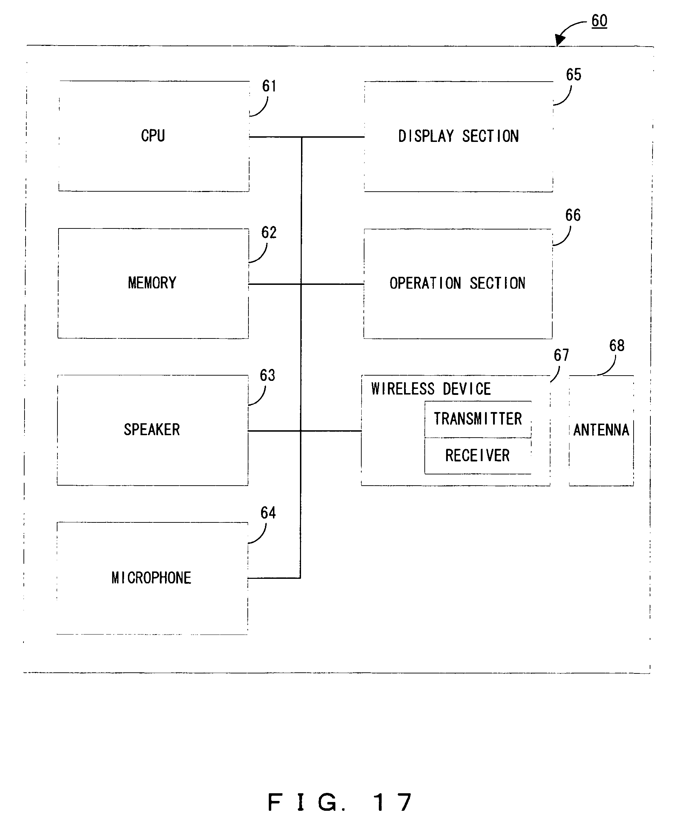

Fig. 17 describes an example of hardware configuration of the mobile terminal.

The mobile terminal 60 shown in Fig. 17 comprises a CPU 61, memory 62, a speaker 63, a microphone 64, a display section 65, an operation section 66, a wireless device 67 and an antenna 68.

The table of location-to-be-analyzed 30, the "received cell broadcast table for location management" 40, the "location-base station ID correspondence table" 50, each database shown in Fig. 11, Fig. 13, and Fig. 15 are stored in, for example, the memory 62. A program causing the mobile terminal 60 (6) to realize functions of each functional unit shown in Fig. 12, that is a program causing execution of processes of the flowcharts in Fig. 6, Fig. 10, Fig. 12 and Fig. 14, is also stored in the memory 62. The CPU 61 performs each type of the above processes by reading out the program from the memory 62 and by executing the program. It is, also, not limited to the example of performing the processes of the present invention by the CPU 61 and the memory 62 of a cell phone, but the process can be performed by an SIM (Subscriber Identity Module) card, for example.

The operation section 66 is operation keys etc., and a user causes operation such as selection of the channel explained above and display of an electronic diary by controlling the operation keys.

The display section 65 is a display etc., and carries out display of the electronic diary etc.

Communication with the base station 3 is performed via the wireless device 67 and the antenna 68.

Current mobile terminals can be construed as a kind of computer because they have a function to realize a variety of processes as explained above.

Also, as stated above, the process relating to location judgment among the processes described above can be performed not by the mobile terminal, but by an arbitrary external server (computer).

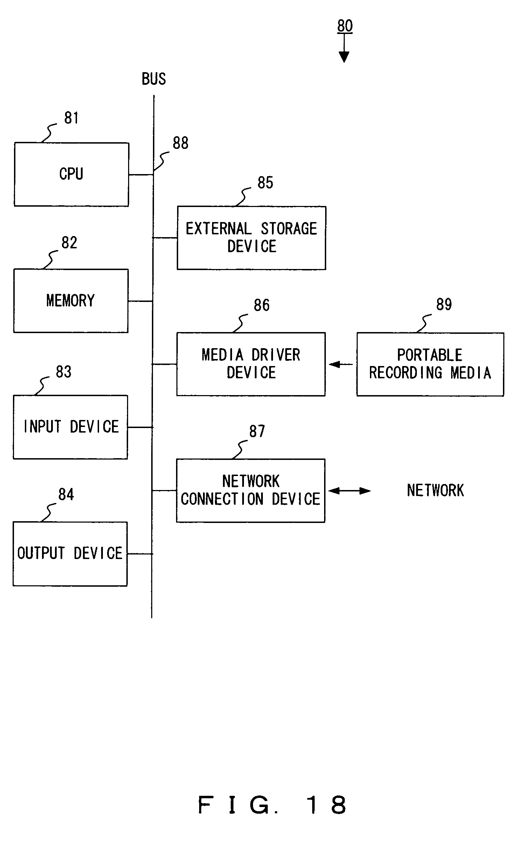

Fig. 18 is a diagram showing an example of the hardware configuration of a computer realizing the above-described location judgment function using the cell broadcast.

A computer 80 shown in Fig. 18 has a configuration, which comprises a CPU 81, memory 82, an input device 83, an output device 84, an external storage device 85, a media driver device 86 and a network connection device 87 etc., and all of which are connected by a bus 88. The configuration presented in Fig. 18 is only an example and it is not limited to this configuration.

The CPU 81 is a central processing unit controlling the entire computer 80.

The memory 82 is memory such as RAM, which, in execution of programs and in data update etc., temporarily stores programs and data stored in the external storage device 85 (or a portable recording media 89). The CPU 81 executes location judgment processes etc. described above using the programs/data loaded in the memory 82.

The input device 83 can be a keyboard, a mouse, a touch panel, for example.

The output device 84 can be a display and a printer, for example.

The external storage device 85 can be a hard disk device, for example, and stores the programs/data etc. for realizing every kind of function. It is also possible that the programs/data etc. are stored in the portable recording media 89 and the media driver device 86 reads out the programs/data etc. stored in the portable recording media 89, and causes the computer 80 to perform a variety of processing, for example. The portable recording media 89 can be an FD (flexible disk), a CD-ROM, a DVD and magnetio-optical disk, for example.

The network connection device 87 has a configuration, which connects to the network (the Internet etc.), and allows transmission and reception of programs and data etc. to/from the external information processor device.

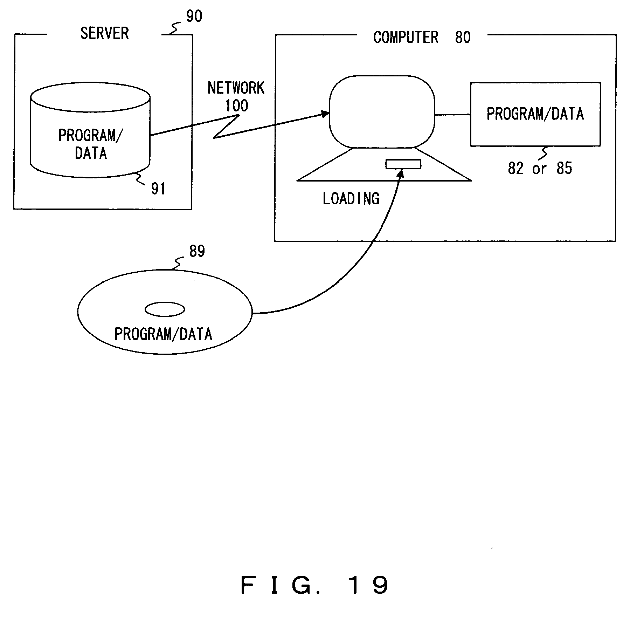

Fig. 19 is a diagram illustrating an example of downloading a program or reading a recording media storing a program.

As shown in Fig 19, the portable recording media 89, storing a program/data realizing a function of the above-recited analysis supporting device, can be inserted to a main body of the information processor 80, and the program/data is loaded and stored in the memory 82, and then is executed. Or the program/data can be a program to download a program/data 91 stored in a server 90 of the external program/data provider via a network 100 (such as the Internet) connected by the network connection device 87.

The present invention, regardless of device/method, can be configured as a storage media itself (the portable recording media 89 etc.) storing the program/data, and also can be configured as a program itself.

**Industrial Applicability**

As explained in details above, according to a location judgment method, mobile terminals thereof, and programs etc. of the present invention, the location of a user possessing a cell phone can be determined, and an event history of the individual can be automatically collected without the need of either a configuration such as a GPS function or mapping information of base stations provided by a network. By associating with an electronic diary, for example, the event history of the user, in the past, can be made to be comprehensible in one glance.

**Claims**

1. A mobile terminal, comprising:

   cell broadcast information reception means for receiving cell broadcast information sent from a base station of a mobile terminal;
   cell broadcast information accumulation means for accumulating the received cell broadcast information associated with reception date and time; and
   location judgment means for judging a location where a user was present at the reception time of the reception date based on information stored in the cell broadcast information accumulation means.

2. The mobile terminal according to claim 1, wherein cell broadcast information used for judgment by the location judgment means is regional information, which is information associated with a distribution area of each of the base stations.

3. The mobile terminal according to claim 2, wherein the location judgment means judges the location based on postal code information comprised in the regional information.

4. The mobile terminal according to claim 2, wherein the location judgment means judges the location based on fixed phone number information comprised in the regional information.

5. The mobile terminal according to claim 2, wherein the location judgment means judges the location based on train station name information comprised in the regional information.

6. The mobile terminal according to any of claims 3~5, wherein the location judgment means judges the location where the user was present by majority when a plurality of locations are extracted.

7. The mobile terminal according to any of claims 1~6, further comprising:

   base station identifier extraction means for extracting a base station identifier sent from the base station with the cell broadcast information;
   base station identifier-location information correspondence means for associating a location judged by the location judgment means with the base station identifier and for storing them; and

second location judgment means for, when the cell broadcast information was sent from a base station with a base station identifier stored in the base station identifier-location information correspondence means, judging the location where the user was present based on the base station identifier-location information correspondence means without using the cell broadcast information.

8.  The mobile terminal according to any of claims 1~7, further comprises information-to-be-analyzed specification means for specifying information to be analyzed by the location judgment means to be information of a specific channel among a plurality of channels delivering the cell broadcast information.

9.  The mobile terminal according to any of claims 1~8, further comprises information-to-be-received specification means for specifying cell broadcast information to be received by the cell broadcast information reception means to be cell broadcast information of a specific channel among a plurality of channels, which the base station delivers.

10. An information processor device comprising location judgment means for, based on cell broadcast information received by a mobile terminal and accumulated in association with a reception date and time, judging a location where a user of the mobile terminal was present at the reception time of the reception date.

11. A location judgment method, comprising steps of:

    receiving cell broadcast information sent from a base station of a mobile terminal;
    accumulating the received cell broadcast information in association with reception date and time; and
    judging a location where a user was present at the reception time of the reception date based on the accumulated cell broadcast information.

12. The location judgment method according to claim 11, wherein cell broadcast information used for the location judgment is regional information, which is the information associated with a distribution area of each of the base stations.

13. The location judgment method according to claim 11 or claim 12, wherein the location judgment judges the location based on postal code information, fixed-line phone numbers or station names comprised in the regional information.

14. A program, which causes a computer to realize functions of:

receiving cell broadcast information sent from a base station of a mobile terminal;
accumulating the received cell broadcast information in association with reception date and time; and
judging a location where a user was present at the reception time of the reception date based on the accumulated cell broadcast information.

15. The program according to claim 14, which judges the location based on postal information, fixed-line phone number information or station name information comprised in the cell broadcast information.

16. A program, which causes a computer to realize a function of judging a location where a user of a mobile terminal was present at a reception time of the reception date, based on cell broadcast information received by the mobile terminal and accumulated after association with the reception date and time.

17. A computer-readable recording media storing a program, which causes a computer to execute functions of:

    receiving cell broadcast information sent from a base station of a mobile terminal;
    accumulating the received cell broadcast information in association with reception date and time; and
    judging a location where a user was present at the reception time of the reception date based on the accumulated cell broadcast information.

COMPUTER 7 (PROVIDES BROADCAST
INFORMATION TO CBC)

THE INTERNET

5

CBC

4

MOBILE
SWITCHING
CENTER MSC

1

RNC

2

RNC

2

RNC

2

BS

3

BS

3

BS

3

BS

3

BS

3

BS

3

Cell-1 Cell-2 Cell-3 Cell-4 Cell-5 Cell-6

6

6

RECEPTION OF CELL 1 BROADCAST

F I G.   1

MOBILE TERMINAL 10

| | 19 |
|---|---|
| BASE STATION ID CHANGE DETECTION SECTION 16 | RECEIVER |

| | |
|---|---|
| INFORMATION-TO-BE-RECEIVED SPECIFICATION SECTION 15 | CELL BROADCAST RECEIVER 11 |
| INFORMATION-TO-BE-ANALYZED SPECIFICATION SECTION 14 | CELL BROADCAST INFORMATION ACCUMULATION SECTION 12 |
| BASE STATION IDENTIFIER EXTRACTION SECTION 17 | LOCATION JUDGMENT SECTION 13 |
| BASE STATION IDENTIFIER-LOCATION INFORMATION CORRESPONDENCE SECTION 18 | SECOND LOCATION JUDGMENT SECTION 19 |

13a

# F I G. 2

| MESSAGE TYPE (1 BYTE) | MESSAGE ID (2 BYTES) | SERIAL NUMBER (2 BYTES) | DATA CODING SCHEME (6 BYTES) | CB DATA (N BYTES) |
|---|---|---|---|---|

F I G. 3

| MID | |
|-----|--------------------------|
| 000 | CHANNEL LIST |
| 001 | |
| 002 | RESTAURANT INFORMATION |
| 003 | : |
| 004 | |
| | |

F I G. 4

EP 1 622 399 A1

| MID |
|-----|
| 002 |
| 015 |
| 017 |
|     |
|     |

F I G. 5

16

CELL BROADCAST RECEPTION

S11 — ACQUISITION OF MID (MESSAGE ID) FROM CB INFORMATION

S12 — IS MID REGISTERED IN TABLE OF LOCATION-TO-BE-ANALYZED?
NO → (to NORMAL CB RECEPTION PROCESS)
YES ↓

S13 — ACQUISITION OF CURRENT BASE STATION ID (BS-ID)

S14 — ACQUISITION OF CURRENT DATE AND TIME INFORMATION

S15 — CORRESPONDS WITH PREVIOUS RECEIVED BASE STATION ID?
YES → S20
NO ↓

S16 — ADDITION OF ENTRY IN "RECEIVED CELL BROADCAST TABLE FOR LOCATION MANAGEMENT". REGISTRATION OF RECEPTION START TIME AND BASE STATION ID

S20 — UPDATE OF LATEST RECEPTION TIME OF LAST ENTRY OF "RECEIVED CELL BROADCAST TABLE FOR LOCATION MANAGEMENT"

S17 — IS BASE STATION ID REGISTERED IN "LOCATION-BASE STATION ID CORRESPONDENCE TABLE"?
NO ↓

S18 — REGISTRATION OF RECEIVED CELL BROADCAST INFORMATION IN "RECEIVED CELL BROADCAST TABLE FOR LOCATION MANAGEMENT"

S19 — NORMAL CB RECEPTION PROCESS

END

F I G. 6

| RECEPTION START TIME | LATEST RECEPTION TIME | BASE STATION ID | RECEIVED CB INFORMATION |
|---|---|---|---|
| 9/14 12:00 | 9/14 14:30 | 1111 | — |
| 9/14 1435 | 9/14 16:05 | 1234 | CBInfo2 |
| 9/14 16:07 | 9/14 16:32 | 3333 | — |
| 9/14 16:35 | 9/14 20:19 | 5678 | — |
| 9/14 20:22 | | 2222 | CBInfo5 |
| | | | |
| | | | |

41 — RECEPTION START TIME
42 — LATEST RECEPTION TIME
40
43 — BASE STATION ID
44 — RECEIVED CB INFORMATION

F I G. 7

50

51

52

| BASE STATION ID | LOCATION |
|---|---|
| 1111 | IN FRONT OF SHIBUYA STATION, SHIBUYA WARD, TOKYO |
| 3333 | MIZONOKUCHI, TAKATSU WARD, KAWASAKI CITY |
| 5678 | NOBORITO, TAMA WARD, KAWASAKI CITY |
|  |  |

F I G.  8

```
RESTAURANT INFORMATION
★TARAFUKU HOUSE
ADDRESS 1-△-○× SHIMOSHINJYO, NAKAHARA WARD,
KAWASAKI CITY, KANAGAWA PREFECTURE 〒106-× × ×
PHONE 044-751-× × × ×
BUSINESS HOURS 11:30-14:00/17:30-22:30
SUN CLOSED


15 MIN. WALK FROM MUSASHISHINJYO STATION, JR NAMBU LINE
10 MIN. WALK FROM MUSASHINAKAHARA STATION, JR NAMBU LINE


★SAN-YOU HANTEN
ADDRESS 1-×-○□ SHIMOSHINJYO, NAKAHARA WARD
KAWASAKI CITY, KANAGAWA PREFECTURE 〒106-× × ×
PHONE 044-751-○△× ×
BUSINESS HOURS 11:00-23:00
OPEN 7 DAYS A WEEK


15 MIN. WALK FROM MUSASHISHINJYO STATION, JR NAMBU LINE
10 MIN. WALK FROM MUSASHINAKAHARA STATION, JR NAMBU LINE


:
```

F I G.  9

LOCATION
DETERMINATION PROCESS
(USING POSTAL CODE)

S31
SEARCH FOR SYMBOL "〒"
FROM CELL BROADCAST
INFORMATION TO BE SEARCHED

S32
IS SYMBOL 〒
RETRIEVED?

NO

YES

S36
DETERMINE LARGEST NUMBERED
LOCATION AMONG DETERMINED
LOCATIONS AS LOCATION OF
POSITION IDENTIFIER

END

S33
EXTRACT 7 DIGIT NUMBER
FOLLOWING SYMBOL 〒

S34
DETERMINE LOCATION FROM
"DATABASE FOR ACTIVITY
ANALYSIS (FOR POSTAL
CODE) (FIG. 11)" BASED ON
EXTRACTED 7 DIGIT NUMBER

S35
SEARCH FOR NEXT SYMBOL 〒

F I G. 1 0

〒211-1234 NAKAHARA WARD, KAWASAKI CITY, KANAGAWA PREFECTURE

⋮ ⋮
⋮ ⋮

F I G. 1 1

```
        ┌─────────────────────────┐
        │ LOCATION DETERMINATION  │
        │ PROCESS (USING PHONE    │
        │       NUMBER)           │
        └─────────────────────────┘
                    │
                    ▼
   ┌──────────────────────────────┐  S41
   │ SEARCH FOR PHONE NUMBER      │
   │ CHARACTERISTIC PARAMETER     │
   │ (NUMBER SEQUENCE WITH        │
   │ SYMBOLS "TEL" OR "−",        │
   │ "(", ")" PRESENT IN-         │
   │ BETWEEN) FROM CELL           │
   │ BROADCAST INFORMATION TO     │
   │ BE SEARCHED                  │
   └──────────────────────────────┘
                    │
                    ▼
            ◇ IS PHONE INFORMATION    S42
  NO ◄──────   RETRIEVED? ◇
      │              │ YES
      │              ▼
      │    ┌──────────────────────┐  S43
      │    │ EXTRACT EXCHANGE     │
      │    │ NUMBER FROM PHONE    │
      │    │ NUMBER               │
      │    └──────────────────────┘
      ▼              │
┌──────────────────────┐  S46        ▼
│ DETERMINE LARGEST    │    ┌──────────────────────┐  S44
│ NUMBERED LOCATION    │    │ DETERMINE LOCATION   │
│ AMONG DETERMINED     │    │ FROM "DATABASE FOR   │
│ LOCATIONS AS         │    │ ACTIVITY ANALYSIS    │
│ LOCATION OF POSITION │    │ (FOR PHONE NUMBER)   │
│ IDENTIFIER           │    │ (FIG.13)" BASED ON   │
└──────────────────────┘    │ EXTRACTED EXCHANGE   │
      │                     │ NUMBER               │
      ▼                     └──────────────────────┘
  ┌───────┐                          │
  │  END  │                          ▼
  └───────┘                 ┌──────────────────────┐  S45
                            │ SEARCH FOR NEXT      │
                            │ PHONE NUMBER         │
                            │ CHARACTERISTIC       │
                            │ PARAMETER            │
                            └──────────────────────┘
```

# F I G. 1 2

```
03-1234-XXXX  XXXX, SHINAGAWA WARD, TOKYO
03-1235-XXXX  YYYY, SHINAGAWA WARD, TOKYO
03-1236-XXXX  ZZZZ, SHINAGAWA WARD, TOKYO
        :                    :
044-777-XXXX  KAMIKOTANAKA, NAKAHARA WARD, KAWASAKI CITY
```

F I G.  1 3

LOCATION DETERMINATION
PROCESS (USING PHONE
NUMBER)

SEARCH FOR JAPANESE
CHARACTER "STATION" FROM
CELL BROADCAST INFORMATION
TO BE SEARCHED  S51

IS JAPANESE
CHARACTER "STATION"
RETRIEVED?  S52

NO

YES

DETERMINE LARGEST NUMBERED
LOCATION AMONG DETERMINED
LOCATIONS AS LOCATION OF
POSITION IDENTIFIER  S61

N=1  S53

EXTRACT N OF JAPANESE
CHARACTERS IN FRONT OF
CHARACTER "STATION"  S54

END

EXTRACT STATIONS
CONTAINING CHARACTER FROM
"DATABASE FOR ACTIVITY
ANALYSIS (FOR TRAIN
STATION) (FIG. 15)" BASED
ON EXTRACTED N OF
CHARACTER SEQUENCE  S55

DOES RELEVANT
STATION EXIST?  S56

NO

YES

IS RELEVANT
STATION ONE?  S57

YES

S59

STORE STATION NAME AS
DETERMINED

NO

N=N+1  S58

S60

SEARCH FOR NEXT "STATION"
CHARACTER

F I G.   1 4

```
(LIST OF NATIONWIDE STATIONS)

MUSASHIKOSUGI STATION
MUSASHINAKAHARA STATION
MUSASHISHINJYO STATION
MUSASHIMIZONOKUCHI STATION
KUJI STATION
SYUKUGAWARA STATION
NOBORITO STATION
NAKANOSHIMA STATION
```

# F I G. 1 5

2002 SEPTEMBER

| MON | TUE | WED | THU | FRI | SAT | SUN |
|---|---|---|---|---|---|---|
| 1<br>13:00<br>SHIBUYA<br>18:00<br>MIZONOKUCHI | 2<br>8:00<br>MIZONOKUCHI | 3 | 4 | 5 | 6 | 7 |
| 8 | 9 | 10 | 11 | 12 | 13 | 14 |
| 15 | 16 | 17 | 18 | 19 | 20 | 21 |
| 22 | 23 | 24 | 25 | 26 | 27 | 28 |
| 29 | 30 | | | | | |

F I G. 1 6

F I G. 1 7

F I G. 1 8

SERVER        90

NETWORK
100

PROGRAM/
DATA

91

COMPUTER    80

PROGRAM/DATA

82 or 85

LOADING

89

PROGRAM/DATA

F I G.   1 9

30

## INTERNATIONAL SEARCH REPORT

| | International application No. |
|---|---|
| | PCT/JP03/05770 |

A. CLASSIFICATION OF SUBJECT MATTER
   Int.Cl⁷ H04Q7/20

According to International Patent Classification (IPC) or to both national classification and IPC

B. FIELDS SEARCHED

Minimum documentation searched (classification system followed by classification symbols)
   Int.Cl⁷ H04B7/24-7/26, H04Q7/00-7/38

Documentation searched other than minimum documentation to the extent that such documents are included in the fields searched
   Jitsuyo Shinan Koho        1922-1996   Toroku Jitsuyo Shinan Koho   1994-2003
   Kokai Jitsuyo Shinan Koho  1971-2003   Jitsuyo Shinan Toroku Koho   1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-65736 A (Sharp Corp.), | 1,10,11,14, 16,17 |
| Y | 08 March, 1996 (08.03.96), Full text; all drawings | 2-5,12,13,15 |
| A | (Family: none) | 6-9 |
| X | JP 2000-59843 A (Kabushiki Kaisha Micro Heriosu), | 1,10,11,14, 16,17 |
| Y | 25 February, 2000 (25.02.00), Abstract; Claims 1, 2 | 2-5,12,13,15 |
| A | (Family: none) | 6-9 |
| X | JP 2002-344867 A (Fujitsu Ltd.), | 1,10,11,14, 16,17 |
| Y | 29 November, 2002 (29.11.02), Claim 1 | 2-5,12,13,15 |
| A | (Family: none) | 6-9 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 August, 2003 (12.08.03) | 26 August, 2003 (26.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

31

## INTERNATIONAL SEARCH REPORT

| International application No. |
| --- |
| PCT/JP03/05770 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-232933 A   (NTT Docomo Inc.),<br>16 August, 2002 (16.08.02),<br>Claim 1<br>& WO 02/63906 A1          & EP 1280369 A1<br>& KR 2002087467 A        & US 2003/0129994 A1 | 2-5,12,13,15 |
| A | JP 2002-223474 A   (Fuji Photo Film Co., Ltd.),<br>09 August, 2002 (09.08.02),<br>Fig. 3<br>(Family: none) | 9 |

Form PCT/ISA/210 (continuation of second sheet) (July 1998)